# EUROPEAN PATENT APPLICATION

(11) **EP 3 855 168 A1**
(43) Date of publication of application: **28.07.2021**
(21) Application number: 21020027.5
(22) Date of filing: 22.01.2021
(51) Int. Cl.: G01N 21/84, B82Y 30/00, B82Y 40/00, G01N 21/25, G01N 21/65

(54) **DEVICE AND METHOD FOR IN SITU PRODUCTION OF NANOPARTICLES FOR SURFACE-ENHANCED RAMAN SPECTROSCOPY IN A MOBILE MEASUREMENT STATION**

(30) Priority: 22.01.2020 PL 43267120
(71) Applicant: Rambox Sp. z o.o., 50-020 Wroclaw (PL)
(72) Inventor: Wróbel, Maciej, 82-200 Malbork (PL); Karpienko, Katarzyna, 80-345 Gdansk (PL); Markiewicz, Natalia, 55-200 Olawa (PL); Andrzejewski, Damian, 50-515 Wroclaw (PL)
(74) Representative: Matyka, Malgorzata

(57) **Abstract**

A device for in situ generation of nanoparticles for SERS measurements in a mobile measurement station is disclosed. The device comprises containers (3, 4, 5) for substances for nanoparticle generation, a chemical reactor (6) with a substance stirring system (7), an automatic titration and dosing system (2) for supplying the substances to the reactor, a heating and process temperature control system (8) for the reactor, sensors for monitoring the nanoparticle generation process, a discharge system (9) for discharging the nanoparticles, a control system (1) operatively connected to the stirring system, the automatic titration and dosing system, the heating and process temperature control system, and the discharge system, wherein the control system is configured to regulate the nanoparticle generation based on feedback information provided by the sensors, and a nanoparticle processing system (10) for the SERS measurements.

## Description

The subject of the invention is a device and *in situ* method production of nanoparticles for Surface-enhanced Raman spectroscopy in a mobile measurement station. The device is used in the field of nanotechnology and materials engineering as well as in those industries which will use nanoparticles to perform measurements. The device produces nanoparticles which are designed to cause the signal amplification effect in the Surface-enhanced Raman spectroscopy method at the measurement site.

Surface-enhanced Raman spectroscopy (SERS) uses nanomaterials to enhance the measurement signal as a result of the interaction of the studied molecule with surface plasmons present on the surface of the material, mainly on precious metal. The most frequently used solution in the application of the SERS method for measurements is the usage of a ready-made nanomaterial (substrate, nanoparticle solution) for contact with the sample. Special designs of nanomaterials allow for obtaining shapes and sizes which enable high signal amplification for various excitation wavelength ranges. However, the main problem in this method is the lack of repeatability of the produced nanomaterials, and thus a large dispersion of the measurement results. A common problem with the usage of ready-made materials is their temporary degradation, which causes changes in their parameters, e.g. efficiency over time, which may distort the measurement results or even make them impossible.

In the present invention, a solution is to use a device producing nanomaterials or preparing nanomaterial from precursors *in situ* at the measurement site, where the tested object is located, installed e.g. in an automatic measuring station or independently outside it. This solution eliminates the problem of the lack of freshness of the substrate, i.e. the time degradation of materials.

The proposed device is constructed in such a way as to be able to produce a series of nanoparticles, however, having two key features. The proposed nanoparticles have a core-shell structure which enables simple and cheap control of the maximum plasmon resonance, which allows the nanoparticles to be adapted to the measurements at the wavelength required by various Raman spectrometers, e.g. in the near infrared range. The second key feature is the usage of silver core nanoparticles, due to the relatively uncomplicated possibilities of controlling their parameters, such as size or shape as well as cost reductions in relation to nanoparticles made entirely of gold.

In the scientific literature as well as patent publications, there are widely described methods for the production of silver nanoparticles or core-shell nanoparticles. There are many commercially available nanoparticles, also specialized for the SERS method. However, there is no solution to the problem of nanomaterials, in the form of a device which produces nanomaterials at the customer's site, *in situ* at the place of measurements, or where the tested objects are. The nanomaterials according to the invention will be produced at the test site and then used for measurements.

There is a known method of producing nanoparticles by mixing precursor solutions deposited on a substrate by means of an inkjet printer according to the patent description US2013316482A1. The manufacturing process begins with cleaning the substrate, which can be made of various materials such as glass, metal, paper or polyamide. The first chemical solution is then deposited on the substrate with the first ink cartridge, with the first chemical solution containing a 1,2-dichlorobenzene (DCB) and oleylamine solution. In the next step, a second chemical solution is deposited on the substrate with the help of a second inkjet cartridge to mix with the first chemical solution and form nanoparticles on the substrate. A significant difference between the invention which is the subject of the present application and the one described in the application US2013316482A1 is that in US2013316482A1 in order to produce nanoparticles (a) it is necessary to stir the chemicals using an inkjet printer and (b) to clean the substrate at the beginning of the process, which is not the case in the proposed solution, where the chemical reactions take place in the reactor and do not require any pre-prepared substrate.

The specification CN101624798A discloses a method of producing nanomaterials, in particular silver nanoparticles applied to a substrate made of natural cellulose. In this method, natural cellulose fibers are used as a matrix. The process of producing nanoparticles begins with placing the matrix in an aqueous solution of silver nitrate and then rinsing it with an ethanol solution. Next, for reduction, the matrix is soaked in a sodium borohydride solution and rinsed with high purity deionized water and subjected to other chemical processes. The described method of nanomaterial production is characterised in that the size of the nanoparticles is small and the distribution of their size is narrow. During the manufacturing process, the substrate is not subjected to any thermal treatment. A significant difference between the invention which is the subject of the present application and the one described in patent CN101624798A is that in CN101624798A for the production of nanoparticles (a) it is necessary to use a matrix which must be made of natural cellulose, (b) the production process does not depend on the temperature, (c) the size of the produced nanoparticles is small and their size distribution is narrow. In the proposed solution, no matrix is used and the temperature of the manufacturing process is its important parameter. Moreover, the solution which is the subject of the present application allows for the production of nanoparticles in different sizes and with different size dispersions.

The invention description US6624886B2 discloses "a method of producing colloidal metal nanoparticles and colloidal thin layers of metal nanoparticles". In particular, the subject of the patent is the production of colloidal metal nanoparticles and thin layers of such nanoparticles by reduction with hydroxylamine. The nanomaterial is synthesized by subjecting the gold colloid monolayer to a reduction process and then providing a solution containing gold ions. A significant difference between the invention being the subject of the present application and the one described in the patent US6624886B2 is that in US6624886B2 for the production of nanoparticles (a) in the first step of the reaction it is necessary to form a gold colloid monolayer, (b) the production process takes place at room temperature (20° C - 23° C). In the present method, silver colloids are produced in the first step and the process temperature may exceed the range of 20 ° C - 23 ° C.

US9822448B2 discloses a unit producing nanoparticles in a reactor chamber using carrier and reaction gases. The unit which is the subject of the patent consists of three parts: nanoparticle production block, nanoparticle coating block, nanoparticle collection block. The essential difference between the invention which is the subject of the present application and the one described in the patent US9822448B2 is that in US9822448B2 for the production of nanoparticles (a) it is necessary to supply gases to the reactor where the reaction takes place. In the proposed solution, only liquid reactants are supplied to the reactor.

The application CN108079919A discloses a system enabling the automatic production of nanoparticles under controlled conditions. The system consists of many blocks, the operation of which is controlled by a computer. The core of the nanoparticle is produced by nucleation using a pulsed laser. A significant difference between the invention which is the subject of the present application and the one described in CN108079919A is that in CN108079919A for the production of nanoparticles (a), the nucleation reaction requires the usage of pulses from a laser source, while in the proposed solution nucleation requires the usage of appropriate temperature and stirring liquid chemicals in the reactor.

The subject of the application is a device for the production of nanotechnological materials made of precious metals (gold, silver, etc. or mixtures thereof) inducing signal amplification in Surface-enhanced Raman spectroscopy (SERS) *in situ* (at the place of measurements), e.g. in a mobile measuring station or outside.

The device consists of elements with the following functions: a control system regulating the operation and carrying out chemical reactions, controlling the parameters of the processes and the appropriate dosing of chemicals as well as transferring the produced nanoparticles to further blocks; a system for distribution and dosing the substances from tanks; chemical tanks; reactor (vessel) with a magnetic heating and stirring system in which the reaction stage takes place; an electronic system with sensors which, based on the responses from sensors (temperature, humidity, optical, etc.), controls the nanomaterials production process. And on the basis of feedback from an optical sensor, the controller automatically regulates the course of the process in order to obtain the desired maximum plasmon resonance of the produced nanoparticles.

In particular, the nanoparticle production system consists of interconnected blocks which can transfer the produced nanoparticles among themselves and transmit information among themselves. A single block consists of (1) a controller regulating the course of the process, (2) an automatic substance dispenser, (3, 4, 5) containers for substances with hoses feeding to the reactor (respectively: deionized water, precursor, reducer etc.), (6) a chemical reactor (tank) with a magnetic stirrer, (7) a set of sensors to control the nanomaterial production process, (8) a thermostat for heating and controlling the process temperature, (9) a system for draining the produced material with a discharge and supply hose to the next block or outside (10) a nanoparticle processing system to perform the measurements.

The subject of the invention is a device of *in situ* production of nanoparticles for Surface-enhanced Raman spectroscopy in a mobile measuring station, **where** one block consists of a control system, an automatic titration and dosing system, containers for substances with a system supplying substances to the reactor, a chemical reactor with substances stirring system, sensors to control the nanomaterial production process, heating and process temperature control system, system for discharging the produced material to the next block outside, nanoparticle processing system for measurements.
Preferably, the device can consist of a larger number of blocks.
Preferably, a device where the second block comprises the same elements as the first block.
Preferably, a device where the control system is common in the case of two or more blocks.
The subject of the invention is a method of *in situ* production of nanoparticles for Surface-enhanced Raman spectroscopy in a mobile measuring station, where the block automatically performs all reaction steps via:
- the control system regulates the amount, concentration, moment, rate and time of adding the appropriate chemicals to the containers,
- as well as the stirring rate and reaction time in the reactor,
- the heating system controls the temperature of the solution,
- the control system regulates the course of processes thanks to feedback in the form of information from the sensor system about the parameters of nanoparticles obtained in the reaction, where the optical spectrum of the solution is recorded in the UV-VIS range (300 - 1100 nm) and optionally the pH of the nanoparticle solution as well as optionally other parameters of nanoparticles.
Preferably, the method where in the first block nanoparticles are produced from one type of material, preferably silver, and in the second block nanoparticles of a different type than in the first block, preferably of the core-shell type, are produced, where the core consist of silver nanoparticles transferred from the first block and the coating is made of different material, most preferably from gold or silica.
Preferably, a method where the produced nanoparticles can be activated to perform Surface enhanced-Raman spectroscopy measurements in a processing system by centrifugation and decantation, and intaking a concentrated nanoparticle solution.
Preferably, the method where the system of optical sensors allows to recognize the maximum of the plasmon resonance curve of the produced nanoparticles and, by means of feedback with the control system, enables automatic tuning of the process to produce nanoparticles with the desired maximum plasmon resonance at a wavelength in the range of 450-1100 nm, equal to the most common wavelengths of lasers used in Raman spectrometers, such as e.g. 514 nm, 532 nm, 633 nm, 785 nm, 830 nm, 1064 nm.

The advantage of the present invention is the production of stable nanoparticles having a surface amplification effect of the signal in Raman spectroscopy. The nanoparticles are produced in the place where they will be used to perform the measurements (*in situ*), e.g. in storage rooms, a factory, or in the field (e.g. at the place of agricultural products production, breeding, etc.), depending on the tested object. Producing durable nanoparticles at the place of measurements, shortly before taking measurements and their activation just before the measurement, allows to eliminate the problem of aging the nanomaterials. The nanoparticles degrade over time what is manifested by a decreased amplification productivity which is unpredictable and causes a decrease in the intensity of the measurement signal. Production and activation of nanoparticles *in situ* ensures measurement quality by increasing the reliability of materials. This is related to the economic effect in the form of savings in costs related to logistics, as the SERS measurement can be performed at the location of the tested objects as well as the elimination of the short time requirement for the production and delivery of ready-made nanomaterials. Savings possible due to better quality and freshness of nanoparticles.

Another advantage is the possibility of producing nanoparticles for the desired wavelength, thanks to the control of the produced nanoparticles parameters by the control system based on the feedback of information from the sensors.

The terms used above as well as in the specification and claims have the following meanings:
**System** - means individual parts of a device which, when connected together, constitute a whole.
**Block** - means a device containing all the elements necessary to generate *in situ* a stable nanoparticle for signal amplification.
**Device** - means one and / or more component blocks.

### Description of the figures:

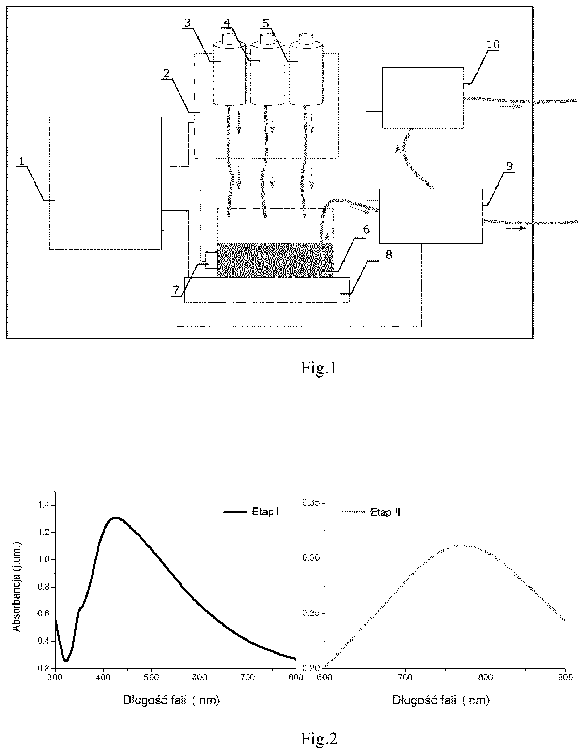

**Fig. 1** - presents a diagram of the first part of the system, the composition of which consists of: (1) control system, (2) automatic titration and dosing system, (3, 4, 5) containers for substances with hoses leading to the reactor (respectively deionized water, precursor, reducer etc.), (6) chemical reactor (tank) with a magnetic stirring system of substances, (7) a set of sensors to control the nanomaterial production process, (8) heating and process temperature control system, (9) system discharging the produced material together with a discharge and supply hose to the next block / outside, (10) a nanoparticle processing system to perform the measurements.
**Fig. 2** - presents the absorbance of an exemplary nanoparticle solution made in stage I and an exemplary nanoparticle solution made in stage II.

The invention is illustrated by the following non-limiting example

### Example

The operation of the device is based on the production of nanoparticles inducing the effect of Surface-enhancement of Raman spectroscopy and the possibility of their activation to perform measurements in the place of the measured object. The device produces one type of nanoparticle in the first stage and then passes them to the second block where the second stage of producing nanoparticles is performed. In the first stage, silver nanoparticles are obtained, and in the second stage, they are covered with a gold coating.

The detailed operation of the device consists in:
(I) preparing the manufacturing equipment by refilling the chemical tanks;
(II) accurately measuring and applying the appropriate substances at the right moment and time to the first reactor (vessel) (6), including stirring control and heating (7) of the vessel (6) so as to produce nanoparticles in the first reaction stage;
(III) transferring the nanomaterials produced in the first reaction step to the second vessel and carrying out the second reaction step by measuring and applying the appropriate substances at the appropriate moment and time, including controlling (1) strirring and heating (7) of the vessel (6).
(IV) control of the entire process is achieved by reading information from sensors (7) by the electronics controlling the system;
(V) storing the produced nanoparticles in a vessel for the finished nanoparticles;
(VI) activation of nanoparticles (10) for measurements with the possibility of transferring them outside the system, e.g. to a mobile measurement station.

### The chemicals used in the process are placed in appropriate containers.

The first stage of the process consists in the production of an aqueous colloid of silver nanoparticles of appropriate sizes, preferably from 40 to 60 nm in diameter, preferably spherical in shape. The production method consists in the synthesis of silver nuclei and then growing the nanoparticles from the nuclei to the desired size and shape.

The second stage of the process consists in creating a gold coating on the silver nanoparticles obtained in the first stage of the process. The thickness of the gold coating allows it to be adjusted to the required wavelength. Typically the required wavelength is equal to the wavelength of the most common lasers, e.g. 512 nm, 532 nm, 633 nm, 785 nm or 830 nm, preferably 785 nm.

The course of process control by the control system enables the usage of feedback information based on the sensor system, including sensors measuring the parameters of the produced nanoparticles. The measurement of the parameters of the produced nanoparticles can be based on the measurement of optical spectra in the range of 300 nm - 1000 nm. For example, a white LED light source system and a photodiode array with an optical filter or a spectrometer can be used.

Performing measurements using the Surface-enhanced Raman spectroscopy requires prior activation of the nanomaterial. For this purpose, the nanoparticles produced in the last stage are subjected to the method of purification from reaction residues and removal of the agent that protects the nanoparticles which prevents their aggregation and contact with the analyte substance. Therefore, in the nanoparticle processing system (10) they are spun, in the range of 500-4000 rcf, preferably 2000 rcf, and then, as a heavier fraction, they are at the bottom. The nanoparticles collected from the bottom after centrifugation are ready for measurement.

### Literature

[1] Stiles, P. L., Dieringer, J. A., Shah, N. C. and Duyne, R. P. V., "Surface-Enhanced Raman Spectroscopy," Annual Review of Analytical Chemistry 1(1), 601-626 (2008).
[2] Mosier-Boss, P., "Review of SERS Substrates for Chemical Sensing," Nanomaterials 7(6), 142 (2017).
[3] Lal, S., Grady, N. K., Kundu, J., Levin, C. S., Lassiter, J. B. and Halas, N. J., "Tailoring plasmonic substrates for surface enhanced spectroscopies," Chem. Soc. Rev. 37(5), 898-911 (2008).
[4] Cialla, D., März, A., Böhme, R., Theil, F., Weber, K., Schmitt, M. and Popp, J., "Surface-enhanced Raman spectroscopy (SERS): progress and trends," Anal Bioanal Chem 403(1), 27-54 (2012).
[5] Lin, X.-M., Cui, Y., Xu, Y.-H., Ren, B. and Tian, Z.-Q., "Surface-enhanced Raman spectroscopy: substrate-related issues," Anal Bioanal Chem 394(7), 1729-1745 (2009).
[6] Rahaman, M. H. and Kemp, B. A., "Analytical model of plasmonic resonance from multiple core-shell nanoparticles," Opt. Eng 56(12), 121903-121903 (2017).
[7] Gupta, R., Siddhanta, S., Mettela, G., Chakraborty, S., Narayana, C. and Kulkarni, G. U., "Solution processed nanomanufacturing of SERS substrates with random Ag nanoholes exhibiting uniformly high enhancement factors," RSC Adv. 5(103), 85019-85027 (2015).
[8] Siddhanta, S., Wróbel, M. S. and Barman, I., "Integration of protein tethering in a rapid and label-free SERS screening platform for drugs of abuse," Chem. Commun. 52(58), 9016-9019 (2016).
[9] Stevenson, A. P., Blanco Bea, D., Civit, S., Antoranz Contera, S., Iglesias Cerveto, A. and Trigueros, S., "Three strategies to stabilise nearly monodispersed silver nanoparticles in aqueous solution," Nanoscale Res Lett 7(1), 151 (2012).
[10] Bastús, N. G., Merkoçi, F., Piella, J. and Puntes, V., "Synthesis of Highly Monodisperse Citrate-Stabilized Silver Nanoparticles of up to 200 nm: Kinetic Control and Catalytic Properties," Chem. Mater. 26(9), 2836-2846 (2014).
[11] Rycenga, M., Cobley, C. M., Zeng, J., Li, W., Moran, C. H., Zhang, Q., Qin, D. and Xia, Y., "Controlling the Synthesis and Assembly of Silver Nanostructures for Plasmonic Applications," Chem. Rev. 111(6), 3669-3712 (2011).

## Claims

1. Device for generation of nanoparticles *in situ* for Surface-enhanced Raman spectroscopy in a mobile measuring station, **characterised in that** one block consists of a control system (1), an automatic titration and dosing system (2), containers for substances with a system for supplying substances to the reactor (3, 4, 5), a chemical reactor (6) with a substance stirring system, sensors to control the nanomaterial production process (7), a heating and process temperature control system (8), a discharge system of the produced material to the next block outside (9), a nanoparticle processing system for measurements (10).

2. Device according to claim 1, **characterised in that** it can consist of a larger number of blocks.

3. Device according to claim 1-2, **characterised in that** the second block consists of the same elements as the first block.

4. Device according to claims 1-3, **characterised in that** in the case of two or more blocks the monitoring system (1) is common.

5. A method of producing nanoparticles in situ for Surface-enhanced Raman spectroscopy in a mobile measuring station, **characterised in that** the block automatically carries out all reaction steps by:
- the control system (1) regulates the amount, concentration, moment, rate and time of adding the appropriate chemicals to the containers (3,4,5),
- as well as the stirring rate and reaction time in the reactor (6),
- the heating system (8) controls the temperature of the solution,
- the control system (1) regulates the course of processes thanks to feedback in the form of information from the sensor system (7) about the parameters of nanoparticles obtained in the reaction, where the optical spectrum of the solution is recorded in the UV-VIS range (300 - 1100 nm) and optionally pH registration of nanoparticle solution, and optionally other nanoparticle parameters.

6. Method according to claim 5, **characterised in that** metallic, preferably silver, nanoparticles are produced in the first block.
- in the second block core-shell type nanoparticles are produced, the core of which are metallic nanoparticles, preferably silver, transferred from the first block, and the coating is preferably made of gold or silica.

7. The method according to claim 5, **characterised in that** the produced nanoparticles can be activated to perform measurements by Surface-enhanced Raman spectroscopy in the processing system (10), by centrifugation and decantation as well as intaking a concentrated solution of nanoparticles.
